# DEMANDE DE BREVET EUROPEEN

(11) **EP 4 369 232 A1**
(43) Date de publication de la demande: **15.05.2024**
(21) Numéro de dépôt: 23208686.8
(22) Date de dépôt: 09.11.2023
(51) Int. Cl.: G06F 21/56, G06F 11/30, G06N 3/02, G06N 3/09, G06N 20/20, H04L 12/28

(54) **PROCEDE DE MODIFICATION D'UN PARAMETRE D'UN PREMIER DISPOSITIF, ET DISPOSITIF ELECTRONIQUE ASSOCIE**

(30) Priorité: 14.11.2022 FR 2211824
(71) Demandeur: Orange, 92130 Issy-les-Moulineaux (FR)
(72) Inventeur: GUIONNET, Chantal, 92326 CHATILLON CEDEX (FR); LEDUBY, Jean-Bernard, 92326 CHATILLON CEDEX (FR)
(74) Mandataire: Cabinet Beau de Loménie

(57) **Abrégé**

L'invention concerne un procédé de modification d'une valeur d'au moins un paramètre d'au moins un premier dispositif, le procédé comprenant : l'obtention d'une activité courante d'un premier utilisateur en fonction de données représentatives du comportement de l'utilisateur dans un environnement comportant au moins un objet connecté, les données étant capturées par le au moins un objet connecté; et, la transmission d'une instruction visant à modifier la valeur du au moins un paramètre du au moins un premier dispositif, en fonction de l'activité obtenue.

## Description

### Domaine Technique

La présente invention appartient au domaine général des télécommunications. Elle concerne plus particulièrement un procédé de modification de la valeur d'un paramètre d'un dispositif d'un utilisateur. Elle concerne également un dispositif électronique configuré pour mettre en oeuvre un tel procédé. L'invention trouve une application particulièrement avantageuse, bien que nullement limitative, lorsque l'utilisateur est situé dans un environnement intelligent dans lequel sont installés des objets connectés (« Internet Of Things » selon la terminologie anglo-saxonne).

### Technique antérieure

De manière conventionnelle, les paramètres de notification de la réception d'un appel téléphonique, d'un message, ou d'un message généré par une application sont gérés de manière manuelle par l'utilisateur du téléphone. Ainsi, si l'utilisateur d'un téléphone portable participe à une réunion, il active typiquement un mode dit « silencieux » de son téléphone. Cependant, dans une telle situation, l'utilisateur du téléphone doit veiller à modifier manuellement ces paramètres de signification. En cas d'oubli, cet utilisateur prend le risque de voir son téléphone sonner pendant la réunion.

Il existe par conséquent un besoin d'une solution permettant d'adapter de manière automatique les paramètres d'un dispositif d'un utilisateur, tel qu'un téléphone portable, en fonction de l'activité d'un utilisateur, permettant ainsi d'améliorer l'expérience de l'utilisateur d'un tel dispositif.

### Exposé de l'invention

La présente invention a pour objectif de remédier à tout ou partie des inconvénients de l'art antérieur, notamment ceux exposés ci-avant, en proposant une solution qui permette d'adapter, de manière automatique, les paramètres du dispositif d'un utilisateur, en fonction de l'activité de cet utilisateur.

Plus particulièrement, la présente invention permet d'adapter de manière automatique les paramètres d'un dispositif, tel qu'un dispositif de communication pouvant par exemple prendre la forme d'un téléphone portable, en fonction de l'activité d'un utilisateur.

A cet effet, et selon un premier aspect, l'invention concerne un procédé de modification d'une valeur d'au moins un paramètre d'au moins un premier dispositif, le procédé comprenant :
- l'obtention d'une activité courante d'un premier utilisateur en fonction de données représentatives du comportement du premier utilisateur dans un environnement comportant au moins un objet connecté, les données étant capturées par le au moins un objet connecté ; et,
- la transmission d'une instruction visant à modifier la valeur du au moins un paramètre du au moins un premier dispositif, en fonction de l'activité obtenue.

Au sens de l'invention, une "activité" est caractérisée par un ensemble d'évènements élémentaires qui sont au moins en partie ordonnés dans le temps. Ces évènements élémentaires décrivent les gestes, les actions et/ou les interactions d'un ou plusieurs utilisateurs, et sont déterminés à partir de données issues d'objets connectés. "Faire la cuisine", "Débuter un cours ou une réunion" sont des exemples d'activités.

Au sens de l'invention, les "données représentatives du comportement d'un utilisateur" désignent ces évènements élémentaires.

Au sens de l'invention, on entend par "geste" un mouvement élémentaire d'une partie du corps humain, tel que "lever la main" ou "baisser la tête".

Au sens de l'invention, on entend par "action", une activité élémentaire d'un utilisateur composée d'un ensemble de gestes organisés temporellement, tel que "marcher", "parler", "boire", "s'asseoir", "accéder à", "ouvrir".

Au sens de l'invention, on entend par "interaction" une activité humaine qui implique plusieurs personnes, par exemple deux personnes qui se parlent ou deux personnes qui regardent un même document.

Au sens de l'invention, on entend par "objet connecté", un dispositif électronique configuré pour transmettre des données. La notion d'objet connecté inclut :
- les capteurs configurés pour transposer une mesure physique, telle que la température ou un mouvement en une donnée numérique ;
- les actionneurs configurés pour générer une action et transmettre, en réponse à l'action générée, une information caractérisant cette action. Le déclenchement d'une alarme, l'activation/désactivation d'un moteur, l'utilisation d'interrupteurs ou variateurs d'intensité lumineuse sont des exemples actions pouvant être générées par un actionneur ;
- un objet dit "intelligent", c'est-à-dire doté de capacités de traitement et d'analyse de données, voire de dialoguer avec un autre dispositif électronique ou avec une infrastructure dédiée, telle qu'une plateforme de collecte et de traitement de données.

Dans des modes particuliers de mise en oeuvre, l'activité du premier utilisateur est déterminée par application d'un réseau de neurones sur les données représentatives du comportement de l'utilisateur, ces données étant capturées par au moins un premier objet connecté d'un premier type et un deuxième objet connecté d'un deuxième type.

Il importe également de noter que l'étape d'obtention d'une activité courante comprend la détermination, par le dispositif mettant en oeuvre cette étape d'obtention, de l'activité courante. En variante, l'étape d'obtention d'une activité courante comprend la réception, par le dispositif mettant en oeuvre cette étape d'obtention, d'une activité courante déterminée par un autre dispositif.

De manière générale, on considère que les étapes d'un procédé ne doivent pas être interprétées comme étant liées à une notion de succession temporelle.

Dans des modes particuliers de mise en oeuvre, le procédé selon l'invention peut comporter en outre l'une ou plusieurs des caractéristiques suivantes, prises isolément ou selon toutes les combinaisons techniquement possibles.

Dans des modes particuliers de mise en oeuvre, le procédé comprend en outre la réception des données représentatives du comportement du premier utilisateur, et l'étape d'obtention d'une activité du premier utilisateur comprend la détermination de la au moins une activité.

Dans des modes particuliers de mise en oeuvre, le procédé selon l'invention comprend en outre une étape d'identification du au moins un premier dispositif et/ou d'obtention de moyens d'accès audit au moins un premier dispositif.

Dans des modes particuliers de mise en oeuvre, le procédé comprend en outre la détermination d'une valeur d'au moins un paramètre du au moins un premier dispositif à modifier.

Dans des modes particuliers de mise en oeuvre, le au moins un paramètre du dispositif est un paramètre représentatif d'une modalité d'interaction.

Au sens de l'invention, une "modalité d'interaction" caractérise les échanges entre un dispositif électronique et son utilisateur. Plus spécifiquement, la modification de la valeur du paramètre vise par exemple à modifier les paramètres de notification de la réception d'un appel ou d'un message, en adaptant le volume de la sonnerie, en activant/désactivant un mode "vibreur", et/ou en activant ou désactivant un mode dit "silencieux", en adaptant la présentation (e.g., l'affichage) d'une donnée sur l'écran du dispositif électronique.

Dans des modes particuliers de mise en oeuvre, le procédé selon l'invention comprend en outre l'obtention d'une valeur courante du au moins un paramètre du premier dispositif, et l'étape de transmission est déclenchée si la valeur courante obtenue est différente de la valeur déterminée.

Cette caractéristique est avantageuse puisqu'elle ne déclenche la transmission de données que lorsqu'un changement est déterminé, de sorte à limiter la quantité de messages transmis entre les différents dispositifs composant le système selon l'invention.

Dans des modes particuliers de mise en œuvre, le procédé selon l'invention comprend en outre :
- l'obtention d'une activité courante d'au moins un deuxième utilisateur différent du premier utilisateur, l'activité du au moins un deuxième utilisateur étant déterminée en fonction de données représentatives du comportement du deuxième l'utilisateur dans l'environnement; et,
et la valeur d'au moins un paramètre du premier dispositif à modifier est déterminée en fonction de l'activité du au moins un deuxième utilisateur.

Cette caractéristique est avantageuse puisque la valeur du paramètre est déterminée en fonction de l'activité des premier et au moins un deuxième utilisateurs. Dans un exemple particulier, le dispositif électronique est celui du premier utilisateur, et une modalité d'interaction entre ce dispositif électronique et le premier utilisateur est déterminée en fonction de l'activité d'un deuxième utilisateur situé à proximité immédiate du premier utilisateur.

Dans des modes particuliers de mise en oeuvre, l'instruction est transmise à une pluralité de premiers dispositifs situés à une distance prédéterminée du premier utilisateur.

Dans des modes particuliers de mise en oeuvre, l'instruction est transmise à un dispositif mobile du premier utilisateur.

Dans des modes particuliers de mise en oeuvre, l'instruction transmise comprend une donnée représentative d'une durée pendant laquelle le au moins un paramètre du au moins un premier dispositif doit considérer la valeur modifiée.

Dans des modes particuliers de mise en oeuvre, le procédé selon l'invention est mis en oeuvre par un deuxième dispositif différent du premier dispositif, tel qu'une passerelle, et l'instruction visant à modifier la valeur d'au moins un paramètre du premier dispositif est transmise par le deuxième dispositif et à destination du premier dispositif.

Dans des modes particuliers de mise en oeuvre, la transmission est déclenchée en réponse à la réception, par le deuxième dispositif, d'une requête de vérification en provenance du premier dispositif.

Dans des modes particuliers de mise en oeuvre, le procédé selon l'invention est mis en oeuvre par le dispositif mobile de l'utilisateur, et l'étape de transmission d'une instruction visant à modifier la valeur d'au moins un paramètre du dispositif est mise en oeuvre au sein dudit dispositif mobile.

Selon un deuxième aspect, l'invention concerne un dispositif électronique configuré pour modifier une valeur d'au moins un paramètre d'au moins un premier dispositif, et comprenant :
- un module d'obtention d'une activité d'un premier utilisateur en fonction de données représentatives du comportement de l'utilisateur dans un environnement comportant au moins un objet connecté, les données étant capturées par le au moins un objet connecté; et,
- un module de transmission d'une instruction visant à modifier la valeur du au moins un paramètre du au moins un premier dispositif, en fonction de l'activité obtenue.

Selon un troisième aspect, l'invention concerne un programme d'ordinateur comportant des instructions pour la mise en oeuvre d'un procédé selon l'invention, lorsque ledit programme est exécuté par un processeur.

Selon un quatrième aspect, l'invention concerne un support d'enregistrement lisible par un ordinateur sur lequel est enregistré le programme d'ordinateur selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig.1A] La figure 1A représente schématiquement un exemple de réalisation conforme à l'invention, d'un système 1000 comprenant une passerelle domestique 100 configurée pour modifier un paramètre d'un dispositif mobile 200 d'un utilisateur, en fonction de l'activité de cet utilisateur ;
[Fig.1B] La figure 1B représente schématiquement un autre exemple de réalisation conforme à l'invention, d'un système 1000 comprenant un serveur distant 400 et d'un dispositif mobile 200 d'un utilisateur.
[Fig.2] La figure 2 représente schématiquement un exemple de réalisation, conforme à l'invention, d'un dispositif électronique configuré pour modifier un paramètre d'un premier dispositif ;
[Fig.3] La figure 3 représente schématiquement un exemple d'architecture matérielle d'un dispositif électronique configuré pour modifier un paramètre d'un premier dispositif ;
[Fig.4A] La figure 4A représente, sous la forme d'ordinogramme, un premier exemple de procédé de modification d'un paramètre, conforme à l'invention ;
[Fig.4B] La figure 4B représente, sous la forme d'ordinogramme, un deuxième exemple de procédé de modification d'un paramètre, conforme à l'invention ;
[Fig.4C] La figure 4C représente, sous la forme d'ordinogramme, un troisième exemple de procédé de modification d'un paramètre, conforme à l'invention ;
[Fig.4D] La figure 4D représente, sous la forme d'ordinogramme, un quatrième exemple de procédé de modification d'un paramètre, conforme à l'invention.

### Description des modes de réalisation

Sauf indication contraire, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

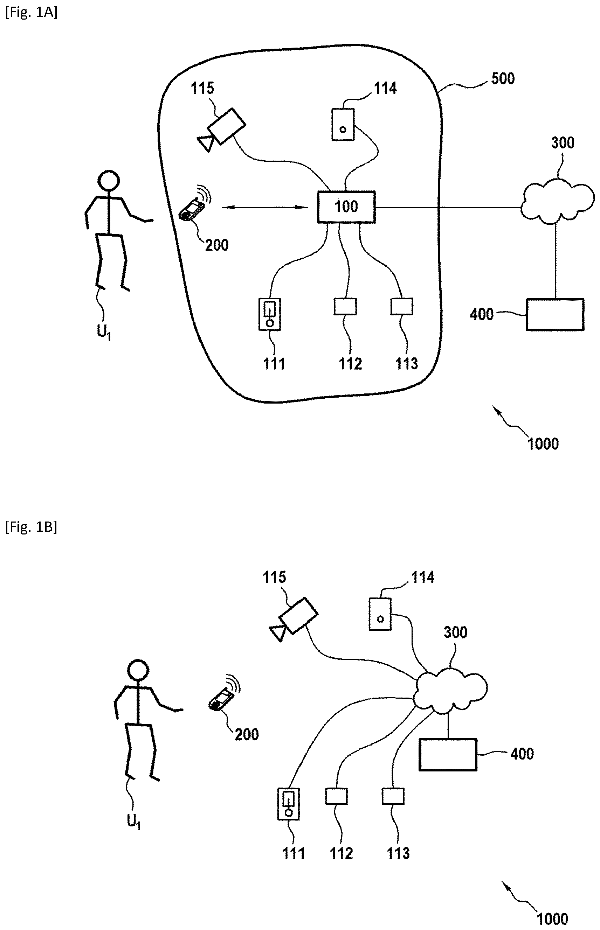

La **figure 1A** représente schématiquement un exemple de réalisation conforme à l'invention, d'un système 1000 comprenant une passerelle domestique 100 configurée pour modifier un paramètre d'un dispositif mobile 200 d'un utilisateur, en fonction de l'activité de cet utilisateur.

Tel qu'illustré par la figure 1A, le système 1000 comprend une passerelle domestique 100. Une passerelle domestique est un équipement de terminaison de réseau et est souvent appelée «box», CPE (initiales de «Customer Premises Equipment » signifiant « équipement de la résidence d'un client »), ou HG (initiales de « Home Gateway » signifiant « passerelle domestique »). Elle a comme rôle principal d'établir et de gérer la connexion entre un réseau local (« Local Area Network » selon la terminologie anglo-saxonne) et un réseau de télécommunications (aussi communément appelé « réseau d'accès », « réseau étendu » ou « Wide Area Network » selon la terminologie anglo-saxonne), tel que l'Internet. Typiquement, une passerelle domestique intègre un routeur, un point d'accès à un réseau sans fil, un switch et un modem.

La passerelle domestique 100 est configurée pour administrer un réseau local 500, par exemple au sein d'une habitation, qui comprend un ensemble d'objets connectés à cette passerelle domestique 100 au travers d'une connexion filaire ou non filaire.

On rappelle ici qu'au sens de l'invention, on entend par "objet connecté" un dispositif électronique configuré pour transmettre des données. La notion d'objet connecté inclut :
- les capteurs configurés pour transposer une mesure physique, telle que la température ou un mouvement en une donnée numérique ;
- les actionneurs configurés pour générer une action et transmettre, en réponse à l'action générée, une information caractérisant cette action. Le déclenchement d'une alarme, l'activation/désactivation d'un moteur, l'utilisation d'interrupteurs ou variateurs d'intensité lumineuse sont des exemples actions pouvant être générées par un actionneur;
- un objet dit "intelligent", c'est-à-dire doté de capacités de traitement et d'analyse de données, voire de dialoguer avec un autre dispositif électronique ou avec une infrastructure dédiée, telle qu'une plateforme de collecte et de traitement de données.

Ces objets connectés prennent par exemple la forme d'un actionneur d'ouverture et de fermeture de porte 111, d'un détecteur de présence 112, d'un variateur de luminosité 113, d'un capteur de son 114 et d'une caméra de vidéo-surveillance 115.

Ces objets connectés transmettent les données collectées à la passerelle 100 au travers du réseau local 500.

Dans cet exemple, la passerelle domestique 100 est configurée de manière matérielle et logicielle pour mettre en oeuvre un procédé de modification selon l'invention. Plus particulièrement, la passerelle domestique 100 est configurée pour communiquer avec le dispositif mobile 200 d'un utilisateur *U*₁. Pour cela, le dispositif 200 de l'utilisateur est connecté au réseau local 500 administré par la passerelle domestique 100, par exemple au travers d'un réseau Wifi local administré par la passerelle domestique installée au sein de l'habitation de l'utilisateur *U*₁.

En variante, la passerelle domestique 100 et le dispositif mobile 200 de l'utilisateur communiquent entre eux au travers d'un réseau de télécommunications 300, tel que l'Internet. En variante, la passerelle domestique 100 communique avec un serveur distant 400, par exemple administré par un gestionnaire de réseaux de télécommunications, au travers d'un premier réseau (par exemple le réseau de télécommunications 300), et le serveur distant 400 communique avec le dispositif mobile 200 de l'utilisateur au travers d'un deuxième réseau de télécommunications (par exemple un réseau cellulaire tels qu'un réseau mobile (ex. 3G, 4G, 5G, etc.), WiMAX, etc.).

On considère ici à titre nullement limitatif le cas où un seul dispositif 200 d'un utilisateur *U*₁. est pris en compte dans le système 1000. L'invention n'en reste pas moins applicable pour une pluralité de dispositifs utilisateurs présents dans un environnement.

Le dispositif 200 d'un utilisateur correspond par exemple à un téléphone cellulaire, par exemple de type smartphone, une tablette tactile, un assistant personnel numérique, un ordinateur personnel, etc. D'une manière générale, aucune limitation n'est attachée à la nature dudit dispositif 200 d'un utilisateur. Par ailleurs, ledit dispositif 200 d'un utilisateur peut occuper une position fixe ou bien encore être mobile, l'invention s'appliquant indifféremment à l'une ou l'autre de ces configurations.

Le dispositif 200 de l'utilisateur est situé à une distance de l'utilisateur qui est inférieure à une valeur seuil prédéterminée (par exemple 4 mètres). Il est également à noter que cette valeur seuil peut être définie en fonction de la taille de l'environnement dans lequel l'invention est mise en oeuvre, et/ou en fonction des activités considérées.

Ce système 1000 est installé au sein d'un environnement, préférentiellement à l'intérieur d'un bâtiment. Il s'agit par exemple d'une salle de réunion, d'un amphithéâtre, d'une salle de spectacle, d'un cinéma, ou d'une habitation.

La **figure 1B** représente schématiquement un autre exemple de réalisation conforme à l'invention, d'un système 1000 comprenant un serveur distant 400 et d'un dispositif mobile 200 d'un utilisateur.

À la différence de la Figure 1A, les objets connectés 111, 112, 113, 114 et 115 ne transmettent plus les données collectés à une passerelle domestique 100, mais directement au serveur distant 400, au travers d'un réseau de télécommunications 300. Pour transmettre ces données, les objets connectés 111, 112, 113, 114 et 115 utilisent par exemple le Bluetooth Low Energy (BLE), le WiFi, le RFID, la Radio Fréquence (RF), des connexions cellulaires (de 2G à 5G), les réseaux LPWAN ou le satellite.

Dans cet exemple, le serveur distant est configuré de manière matérielle et logicielle pour mettre en oeuvre un procédé de modification selon l'invention, et notamment pour transmettre au dispositif mobile 200, une instruction visant à modifier la valeur d'un paramètre du dispositif mobile 200.

En alternative, c'est le dispositif mobile 200 qui est configuré de manière matérielle et logicielle pour mettre en oeuvre un procédé de modification selon l'invention, et notamment pour transmettre à un module dudit dispositif apte à adapter une modalité d'interaction de ce dispositif, une instruction visant à modifier la valeur d'un paramètre.

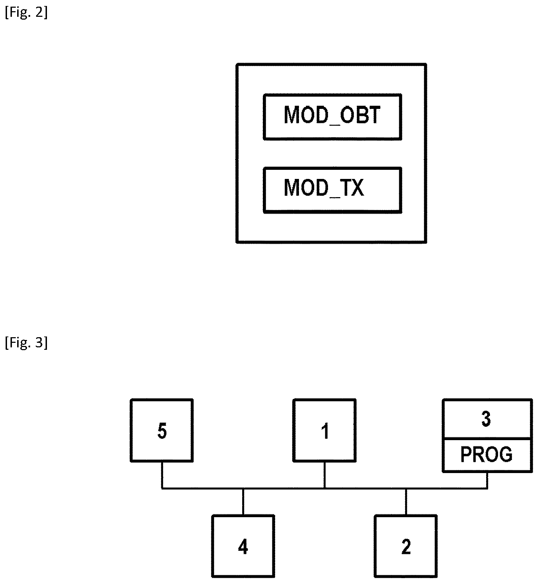

La **figure 2** représente schématiquement un exemple de réalisation, conforme à l'invention, d'un dispositif électronique configuré pour modifier un paramètre d'un dispositif d'un utilisateur.

Ce dispositif électronique correspond par exemple à une passerelle, telle que la passerelle domestique 100 de la Figure 1A, à un dispositif mobile, tel que le dispositif mobile 200 de l'utilisateur *U*₁ de la Figure 1B, ou à un serveur distant, tel que le serveur distant 400 de la Figure 1B.

Il comprend notamment un module MOD_OBT d'obtention d'une activité courante d'un premier utilisateur en fonction de données représentatives du comportement de cet utilisateur, et un module MOD_TX de transmission d'une instruction dont les fonctionnalités sont décrites ci-après.

La **figure 3** représente schématiquement un exemple d'architecture matérielle d'un dispositif électronique configuré pour modifier un paramètre d'un dispositif d'un utilisateur.

Tel qu'illustré par la figure 3, le dispositif électronique dispose de l'architecture matérielle d'un ordinateur. Ainsi, le dispositif électronique comporte, notamment, un processeur 1, une mémoire vive 2, une mémoire morte 3 et une mémoire non volatile 4. Il comporte en outre un module de communication 5.

La mémoire morte 3 du dispositif électronique constitue un support d'enregistrement tel que proposé, lisible par le processeur 1 et sur lequel est enregistré un programme d'ordinateur PROG conforme à l'invention, comportant des instructions pour l'exécution d'étapes du procédé de modification tel que proposé. Le programme PROG définit des modules fonctionnels du dispositif électronique tels que représentés à la figure 2, qui s'appuient ou commandent les éléments matériels 1 à 5 du dispositif électronique cités précédemment, et qui comprennent notamment :
- un module MOD_OBT d'obtention d'une activité courante d'un premier utilisateur en fonction de données représentatives du comportement de ce premier utilisateur dans un environnement comportant au moins un objet connecté, les données étant capturées par le au moins un objet connecté; et,
- un module MOD_TX de transmission d'une instruction visant à modifier la valeur du au moins un paramètre du au moins un premier dispositif, en fonction de l'activité obtenue.

Par ailleurs, le dispositif électronique peut encore comporter d'autres modules, notamment pour mettre en oeuvre des modes particuliers du procédé de modification, comme cela est décrit plus en détail ultérieurement.

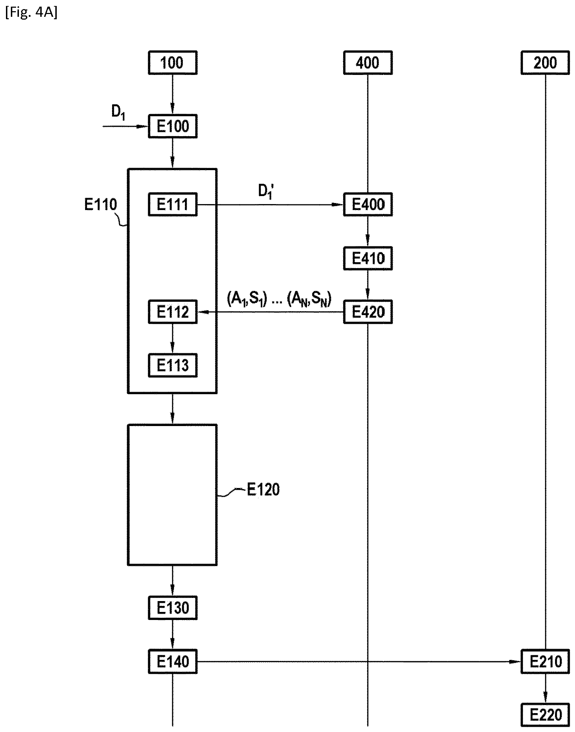

La **figure 4A** représente, sous la forme d'ordinogramme, un premier exemple de procédé de modification d'un paramètre, conforme à l'invention.

Lors d'une première étape E100, la passerelle 100 obtient des données *D*₁ capturées par une pluralité d'objets connectés d'au moins deux types, tels que les objets connectés 111 à 115 des figures 1A et 1B. Les objets connectés sont d'au moins deux types dans le sens où leurs fonctionnalités sont différentes. Il s'agit par exemple de données capturées par le détecteur de présence 112 et de données capturées par le capteur de son 114 de la Figure 1A ou 1B. Les données capturées sont représentatives du comportement d'un utilisateur dans un environnement. Il s'agit par exemple de données représentatives d'un geste (ou d'une séquence de gestes), tel que "lever la main" ou "baisser la tête", d'une action d'un utilisateur tel que "marcher", "parler", "boire", "s'asseoir", d'un son, d'une position de cet utilisateur, etc.

Le procédé de modification comprend en outre une étape d'obtention (E110) d'une activité de l'utilisateur déterminée par application d'un réseau de neurones sur les données *D*₁ ou sur des données issues d'une première analyse de ces données *D*₁. Une première analyse est dans ce cas réalisée par la passerelle, par exemple pour filtrer certaines valeurs, ou pour identifier des données erronées.

Dans cet exemple, l'étape E110 comprend les sous-étapes E111, E112 et E113. Les données *D*₁ ou sur les données *D*₁' analysées sont transmises lors d'une étape E111 à un serveur distant 400, par exemple le serveur 400 de la Figure 1A ou 1B, puis reçues par ce serveur lors d'une étape E400.

Le procédé de modification comprend en outre une étape E410 de détermination, par le serveur distant 400, d'une activité de l'utilisateur. Cette étape de détermination est par exemple mise en oeuvre par application d'un réseau de neurones sur des données représentatives du comportement de l'utilisateur. Ce réseau de neurones réalise une fusion des données reçues en extrayant automatiquement des caractéristiques des données reçues, puis ces caractéristiques alimentent un classifieur configuré pour associer un score de confiance à au moins une activité.

Les détails de mise en oeuvre de l'étape E410 de détection d'activités sont par exemple décrits dans les documents suivants : « Multimodal Deep Learning for Group Activity Recognition in Smart Office Environments », Florea et Al., Future Internet, 2020 ; « Activity Récognition on Streaming Sensor Data », Krishnan et AI., Pervasive and Mobile Computing, Volume 10, 2014 ».

Dans cet exemple, le classifieur génère, à partir des données *D*₁' , un ensemble de couples (*Aᵢ*; *Sᵢ*), pour i = 1 ... N, avec N un nombre d'activités, *Aᵢ* une donnée d'identification d'une activité, et *Sᵢ* un score associé à l'activité *Aᵢ*. Cet ensemble de couples est transmis par le serveur distant 400 lors d'une étape E420, puis reçu par la passerelle 100 lors d'une étape E112. Lors d'une étape E113, la passerelle sélectionne une des activités (*Aᵢ* ;*Sᵢ*) en fonction de son score de confiance. Dans un mode de réalisation particulier, la passerelle sélectionne l'activité ayant le score de confiance le plus élevé.

Le procédé comprend en outre une étape E120 de détermination d'une valeur d'au moins un paramètre du au moins un premier dispositif à modifier, en fonction de l'activité obtenue lors de l'étape E110.

Dans un mode de réalisation particulier, la passerelle comprend une table d'association associant, à une activité donnée, une configuration spécifique du dispositif caractérisée par des valeurs que les paramètres du dispositif doivent alors prendre. Dans ce cas, la valeur d'au moins un paramètre du au moins un premier dispositif à modifier est déterminée par consultation de cette table d'association.

Dans un mode de réalisation particulier, ce paramètre est un paramètre représentatif d'une modalité d'interaction. Plus spécifiquement, la modification de la valeur du paramètre vise par exemple à modifier les paramètres de notification de la réception d'un appel ou d'un message, en adaptant le volume de la sonnerie, en activant/désactivant un mode "vibreur", et/ou en activant ou désactivant un mode dit "silencieux", en adaptant la présentation (e.g., l'affichage) d'une donnée sur l'écran du dispositif mobile 200.

Dans un mode de réalisation particulier, l'étape E120 comprend en outre une étape d'obtention d'une valeur courante du au moins un paramètre du premier dispositif, et les étapes d'identification (E130) et de transmission (E140) décrites ci-après sont déclenchées si la valeur courante obtenue est différente de la valeur déterminée. En variante, les étapes d'identification (E130) et de transmission (E140) sont systématiquement déclenchées dès qu'une nouvelle activité est détectée, dès qu'une fin d'activité est détectée ou dès qu'une modification d'activité est détectée. En variante, une application installée sur le dispositif mobile 200 transmet régulièrement une requête en vérification à la passerelle, et la transmission (E140) est déclenchée en réponse à la réception, par la passerelle, de cette requête.

Le procédé comprend en outre une étape E130 d'identification et d'obtention de moyens de d'accès au dispositif mobile 200 dont une valeur d'au moins un paramètre doit être modifiée.

Dans un mode de réalisation particulier, la passerelle identifie l'utilisateur par analyse des données capturées par un objet connecté (par exemple en appliquant un algorithme de reconnaissance faciale à des images vidéo capturées par la caméra de vidéo-surveillance 115), et accède à une table d'association associant un utilisateur à un identifiant et/ou à des données d'accès à un dispositif mobile 200.

Cet identifiant et/ou ces données d'accès correspondent par exemple à :
- un numéro IMEI (acronyme de l'expression anglo-saxonne « International Mobile Equipment Identity »),
- un numéro de série du dispositif mobile,
- un numéro de série de la carte SIM insérée ou embarquée dans le dispositif mobile,
- un numéro de téléphone,
- une adresse IP locale,
- une adresse matérielle MAC (acronyme de l'expression anglo-saxonne « Media Access Control ») dudit dispositif mobile.

Il peut d'ailleurs être noté que de telles données sont susceptibles d'être transmises à l'insu de l'utilisateur alors même qu'aucune carte SIM n'est activée par le dispositif mobile 200.

Le procédé comprend en outre une étape E140 de transmission, par la passerelle 100 et à destination du dispositif mobile 200, de la valeur courante du au moins un paramètre déterminée à l'étape E120. Plus précisément, une requête en modification d'un paramètre comprenant un identifiant du paramètre, ainsi que la valeur à prendre est transmise au dispositif mobile 200, qui le reçoit lors d'une étape E210.

Enfin, lors d'une étape E220, le dispositif mobile applique cette nouvelle valeur, de sorte à adapter le dispositif mobile 200 à l'activité humaine détectée lors de l'étape E110.

Dans un mode particulier de mise en œuvre, ce paramétrage automatique est ajusté par l'utilisateur du dispositif mobile 200 après que le dispositif mobile 200 a reçu l'instruction visant à modifier la valeur d'un de ses paramètres, ou paramétré en amont par cet utilisateur, de sorte que le dispositif mobile 200 n'est pas automatiquement mis-à-jour en réponse à la réception d'une telle instruction.

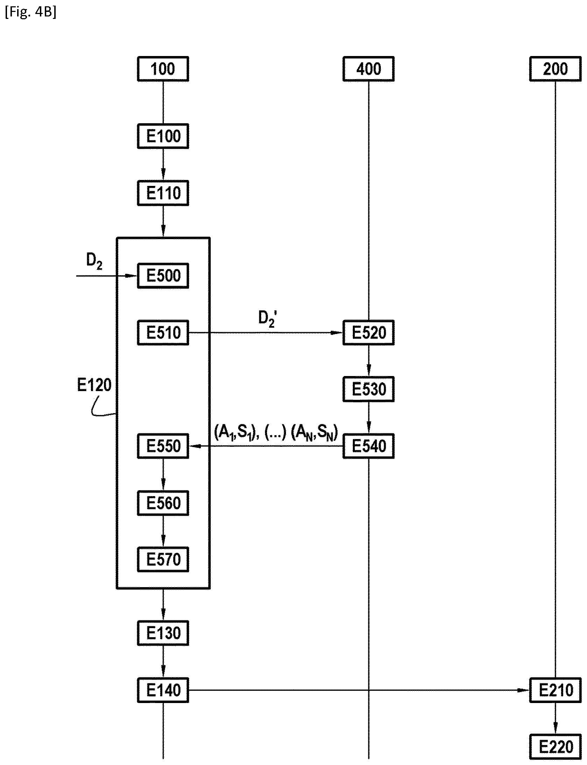

La **figure 4B** représente, sous la forme d'ordinogramme, un deuxième exemple de procédé de modification d'un paramètre, conforme à l'invention.

Lors d'une première étape E100, la passerelle 100 obtient des données *D*₁. Le procédé de modification comprend en outre une étape E110 d'obtention d'une activité d'un premier utilisateur déterminée par application d'un réseau de neurones sur les données *D*₁ ou sur des données issues d'une première analyse de ces données *D*₁, et une étape E120 de détermination d'une valeur d'au moins un paramètre du au moins un premier dispositif à modifier, en fonction de l'activité obtenue lors de l'étape E110, telles que décrites par exemple en référence à la Figure 4A.

Cette étape E120 comprend une sous-étape E500 de réception de données représentatives d'au moins un deuxième utilisateur différent du premier utilisateur, ces données étant également capturées par des objets connectés. Ces objets connectés correspondent à ceux ayant capturé les données représentatives du comportement du premier utilisateur, ou à d'autres objets connectés.

Il existe un "lien dynamique" entre les utilisateurs. Ainsi, ce deuxième utilisateur est par exemple situé à proximité immédiate du premier utilisateur (par exemple dans la même pièce que le premier utilisateur), ou est physiquement éloigné du premier utilisateur mais connecté à un système de vidéo-conférence permettant d'interagir avec ce premier utilisateur.

Ces données *D*₂ (ou les données *D*₂' résultant d'une première analyse des données *D*₂) sont transmises par la passerelle 100, lors d'une étape E510, puis reçues par le serveur distant 400 lors d'une étape E520.

Le procédé de modification comprend en outre une étape E530 de détermination, par le serveur distant 400, d'une activité du deuxième l'utilisateur par application d'un réseau de neurones sur des données représentatives du comportement de l'utilisateur. Cette étape est similaire à l'étape E410 précédemment décrite en référence à la Figure 4A.

Dans cet exemple, le classifieur génère, à partir des données *D*₁', un ensemble de couples (*Aᵢ* ; *Sᵢ*), pour *i* = 1 ... *N,* avec N un nombre d'activités, *Aᵢ* une donnée d'identification d'une activité, et *Sᵢ* un score associé à l'activité *Aᵢ*. Cet ensemble de couples est transmis par le serveur distant 400 lors d'une étape E540, puis reçu par la passerelle 100 lors d'une étape E550. Lors d'une étape E560, la passerelle sélectionne une des activités (*Aᵢ* ; *Sᵢ*) du deuxième utilisateur en fonction de son score de confiance. Dans un mode de réalisation particulier, la passerelle sélectionne l'activité ayant le score de confiance le plus élevé.

Le procédé comprend en outre une étape E570 au cours de laquelle une valeur d'au moins un paramètre du premier dispositif à modifier est déterminée, en fonction de l'activité du premier utilisateur obtenue lors de l'étape E110 et de l'activité du deuxième utilisateur obtenue lors de l'étape E560.

En variante, les données représentatives du comportement de plusieurs deuxièmes utilisateurs sont détectées, et la valeur d'au moins un paramètre du premier dispositif à modifier est déterminée en fonction de l'activité du premier utilisateur obtenue lors de l'étape E110 et de chacune des activités des deuxièmes utilisateurs obtenues lors de l'étape E560.

En variante, les données représentatives du comportement de plusieurs deuxièmes utilisateurs sont détectées, et la valeur d'au moins un paramètre du premier dispositif à modifier est déterminée en fonction de l'activité du premier utilisateur obtenue lors de l'étape E110 et d'une activité globale du groupe d'utilisateurs composé des deuxièmes utilisateurs. Cette activité globale du groupe d'utilisateurs est par exemple déterminée par le serveur 400, et seule une donnée d'identification d'une activité globale, et éventuellement un score associé, sont transmis à la passerelle 100 lors de l'étape E540. En variante, le serveur transmet, pour chaque deuxième utilisateur du groupe, une donnée d'identification, et éventuellement un score associé. Dans ce dernier cas, la détermination d'une activité globale est mise en oeuvre par la passerelle 100, en fonction des données d'identifications reçues, et éventuellement de leur score associé.

Dans des modes particuliers de mise en oeuvre, les valeurs des activités des deuxièmes utilisateurs sont pondérées en fonction de leur proximité géographique avec le premier utilisateur, ou en fonction de la nature même de leur activité, lors de l'étape de détermination de la valeur d'au moins un paramètre du premier dispositif à modifier.

Autrement dit, dans des modes de mise en oeuvre particuliers, les activités du ou des deuxièmes utilisateurs sont prises en compte dans le paramétrage du dispositif électronique du premier utilisateur. Ainsi, lorsque le premier utilisateur travaille par exemple dans un espace de travail collectif à proximité de deuxièmes utilisateurs, la modalité d'interaction du dispositif mobile 200 du premier utilisateur est adaptée au contexte, en activant par exemple le mode "vibreur".

Le procédé comprend en outre une étape E130 d'identification et d'obtention de moyens de d'accès au dispositif mobile 200 dont une valeur d'au moins un paramètre doit être modifiée.

Dans un mode de réalisation, l'instruction est transmise au dispositif mobile 200 du premier utilisateur, et l'étape d'identification est une étape d'identification et d'obtention de moyens de d'accès au dispositif mobile 200 du premier utilisateur, telle que décrite par exemple en référence à la Figure 4A.

En variante, l'instruction est transmise au(x) dispositif(s) mobile(s) 200 du(des) deuxième(s) utilisateur(s), et l'étape d'identification est une étape d'identification et d'obtention de moyens de d'accès au(x) dispositif(s) mobile(s) 200 du(des) deuxième(s) utilisateur(s).

Dans un exemple de mise en oeuvre, les moyens de d'accès au(x) dispositif(s) mobile(s) 200 du(des) deuxième(s) utilisateur(s) sont préalablement stockés dans une base de données, par exemple populée lors d'une session d'inscription à un évènement, et l'étape d'identification et d'obtention de moyens de d'accès comprend l'accès à cette base de données.

En variante, l'instruction est transmise au dispositif mobile 200 du premier utilisateur et au(x) dispositif(s) mobile(s) 200 du(des) deuxième(s) utilisateur(s), et l'étape d'identification est une étape d'identification et d'obtention de moyens de d'accès au dispositif mobile 200 du premier utilisateur et au(x) dispositif(s) mobile(s) 200 du(des) deuxième(s) utilisateur(s).

Dans des modes de mise en oeuvre particuliers, l'instruction transmise comprend une donnée représentative du temps pendant lequel le au moins un paramètre du au moins un premier dispositif doit considérer la valeur modifiée.

Ainsi le gestionnaire d'un environnement telle qu'une salle de spectacle ou un amphithéâtre est par exemple en mesure de contrôler les modalités d'interaction des dispositifs électroniques d'utilisateurs, mais cette modification n'est réalisée que pendant une durée prédéterminée, correspondant par exemple à la durée du spectacle ou du cours.

De cette manière, tant que les acteurs n'ont pas commencé à jouer les spectateurs ont la possibilité de recevoir des appels. Lorsque le démarrage du spectacle est détecté, une instruction est transmise aux dispositifs des spectateurs de sorte à ce que leur modalité d'interaction soit modifiée pendant la durée du spectacle.

Le procédé comprend en outre une étape E140 de transmission de la valeur à prendre au(x) dispositif(s) identifié(s) lors de l'étape E130, qui la reçoive lors d'une étape E210. Enfin, lors d'une étape E220, le(s) dispositif(s) identifié(s) applique(nt) cette nouvelle valeur, de sorte à s'adapter à l'activité humaine détectée lors de l'étape E110.

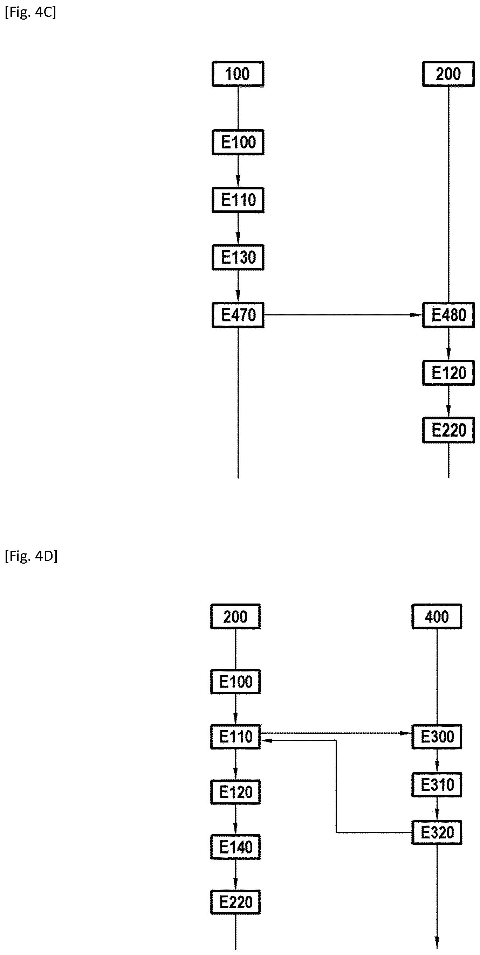

La **figure 4C** représente, sous la forme d'ordinogramme, un troisième exemple de procédé de modification d'un paramètre, conforme à l'invention.

Lors d'une première étape E100, la passerelle 100 obtient des données *D*₁. Le procédé de modification comprend en outre une étape E110 d'obtention d'une activité d'un premier utilisateur déterminée par application d'un réseau de neurones sur les données *D*₁ ou sur des données issues d'une première analyse de ces données *D*₁, telle que décrite par exemple en référence à la Figure 4A.

Le procédé comprend en outre une étape E130 d'identification et d'obtention de moyens de d'accès à un dispositif mobile 200 dont une valeur d'au moins un paramètre doit être modifiée, telle que décrite par exemple en référence à la Figure 4A.

Puis, lors d'une étape E470, l'activité d'un premier utilisateur obtenue lors de l'étape E100 est transmise au dispositif mobile 200 identifié lors de l'étape E130, puis reçue par ce dispositif 200 lors d'une étape E480. En variante, cette étape de transmission n'est déclenchée qu'en réponse à la réception, par la passerelle d'une requête en vérification émise par le dispositif mobile 200.

Le procédé comprend en outre une étape E120 de détermination, par le dispositif mobile 200, d'une valeur d'au moins un paramètre du au moins un premier dispositif à modifier, en fonction de l'activité obtenue lors de l'étape E110, telle que décrite par exemple en référence à la Figure 4A. Enfin, lors d'une étape E220, le dispositif mobile applique cette nouvelle valeur, de sorte à s'adapter à l'activité humaine obtenue lors de l'étape E110.

La **figure 4D** représente, sous la forme d'ordinogramme, un quatrième exemple de procédé de modification d'un paramètre, conforme à l'invention.

Lors d'une première étape E100, le dispositif mobile 200 obtient des données *D*₁. Le procédé de modification comprend en outre une étape E110 d'obtention, par le dispositif mobile 200, d'une activité d'un premier utilisateur déterminée par application d'un réseau de neurones sur les données *D*₁ ou sur des données issues d'une première analyse de ces données *D*₁, telle que décrite par exemple en référence à la Figure 4A.

Le procédé comprend en outre une étape E120 de détermination, par le dispositif mobile 200, d'une valeur d'au moins un paramètre du au moins un premier dispositif à modifier, en fonction de l'activité obtenue lors de l'étape E110, telle que décrite par exemple en référence à la Figure 4A.

Puis, lors d'une étape E140, une instruction visant à modifier la valeur du au moins un paramètre du dispositif mobile 200 st transmise, au sein dudit dispositif mobile, à un module dudit dispositif apte à adapter une modalité d'interaction de ce dispositif.

Enfin, lors d'une étape E220, le dispositif mobile applique cette nouvelle valeur, de sorte à s'adapter à l'activité humaine obtenue lors de l'étape E110.

### Scenarii d'application

### Exemple 1 :

Pierre arrive en retard à la réunion au cours de laquelle il doit faire une présentation. Sans prendre le temps de configurer son téléphone portable en mode "silencieux", il débute sa présentation. Sa mère, toujours impatiente, n'a pas encore reçu la réponse au message SMS qu'elle lui a envoyé hier. Elle lui envoie un nouveau sms, puis après quelques instants, décide de l'appeler.

Heureusement pour Pierre, en entrant dans la salle de réunion, la passerelle installée dans la salle a détecté son activité en a déduit que son téléphone devait être en mode "silencieux", et a transmis une instruction en ce sens à son téléphone portable.

### Exemple 2 :

Jeanne arrive dans un amphithéâtre pour assister à un exposé. La passerelle installée dans l'amphithéâtre détecte la présence de nombreuses personnes en train de s'installer, et son téléphone active le mode "vibreur" en réponse à la réception d'une instruction de la passerelle. Puisqu'il y a beaucoup de bruit, le vibreur ne va déranger personne tant que l'exposé ne commence pas.

Le présentateur arrive, commence son exposé, il est maintenant le seul à parler. Avec la détection de cette nouvelle activité du présentateur, le silence revenu dans l'amphithéâtre, et la passerelle envoie à tous les téléphones détectés dans l'amphithéâtre une instruction de modifications des paramètres pour passer en mode "silencieux", et en désactivant le mode "vibreur".

### Exemple 3 :

Rose est en train d'écouter de la musique au casque. Un dispositif détecte son activité et en déduit qu'elle ne pourra pas entendre les appels, aussi il déclenche le flash de la lampe de son téléphone dès qu'un appel est reçu.

## Revendications

1. Procédé de modification d'une valeur d'au moins un paramètre d'au moins un premier dispositif, le procédé comprenant :
- l'obtention (E110) d'une activité courante d'un premier utilisateur en fonction de données représentatives du comportement du premier utilisateur dans un environnement comportant au moins un objet connecté, les données étant capturées par le au moins un objet connecté ; et,
- la transmission (E140) d'une instruction visant à modifier la valeur du au moins un paramètre du au moins un premier dispositif, en fonction de l'activité obtenue.

2. Procédé de modification selon la revendication 1, comprenant en outre la réception (E100) des données représentatives du comportement du premier utilisateur, et l'étape d'obtention (E110) d'une activité du premier utilisateur comprend la détermination de la au moins une activité.

3. Procédé de modification selon la revendication 1 ou 2, comprenant en outre une étape d'identification (E130) du au moins un premier dispositif et/ou d'obtention de moyens d'accès audit au moins un premier dispositif.

4. Procédé de modification selon l'une quelconque des revendications 1 à 3, comprenant en outre la détermination (E120) d'une valeur d'au moins un paramètre du au moins un premier dispositif à modifier.

5. Procédé de modification selon l'une quelconque des revendications 1 à 4, dans lequel le au moins un paramètre du dispositif est un paramètre représentatif d'une modalité d'interaction.

6. Procédé de modification selon l'une quelconque des revendications 4 ou 5, comprenant en outre l'obtention d'une valeur courante du au moins un paramètre du premier dispositif, et l'étape de transmission est déclenchée si la valeur courante obtenue est différente de la valeur déterminée.

7. Procédé de modification selon l'une quelconque des revendications 1 à 6, comprenant en outre :
- l'obtention d'une activité courante d'au moins un deuxième utilisateur différent du premier utilisateur, l'activité du au moins un deuxième utilisateur étant déterminée en fonction de données représentatives du comportement du deuxième l'utilisateur dans ledit environnement ; et,
et la valeur d'au moins un paramètre du premier dispositif à modifier est déterminée en fonction de l'activité du au moins un deuxième utilisateur.

8. Procédé de modification selon l'une quelconque des revendications 1 à 7, dans lequel l'instruction est transmise (E140) à une pluralité de premiers dispositifs situés à une distance prédéterminée du premier utilisateur.

9. Procédé de modification selon l'une quelconque des revendications 1 à 7, dans lequel l'instruction est transmise (E140) à un dispositif mobile du premier utilisateur.

10. Procédé de modification l'une quelconque des revendications 1 à 9, dans lequel l'instruction transmise comprend une donnée représentative d'une durée pendant laquelle le au moins un paramètre du au moins un premier dispositif doit considérer la valeur modifiée.

11. Procédé de modification selon l'une quelconque des revendications 1 à 10, mis en oeuvre par un deuxième dispositif différent du premier dispositif, tel qu'une passerelle, et l'instruction visant à modifier la valeur d'au moins un paramètre du premier dispositif est transmise par le deuxième dispositif et à destination du premier dispositif.

12. Procédé de modification selon la revendication 11, dans lequel la transmission est déclenchée en réponse à la réception, par le deuxième dispositif, d'une requête en vérification en provenance du premier dispositif.

13. Dispositif électronique configuré pour modifier une valeur d'au moins un paramètre d'au moins un premier dispositif, et comprenant :
- un module (MOD_OBT) d'obtention d'une activité courante d'un premier utilisateur en fonction de données représentatives du comportement du premier utilisateur dans un environnement comportant au moins un objet connecté, les données étant capturées par le au moins un objet connecté; et,
- un module (MOD_TX) de transmission d'une instruction visant à modifier la valeur du au moins un paramètre du au moins un premier dispositif, en fonction de l'activité obtenue.

14. Programme d'ordinateur comportant des instructions pour la mise en oeuvre d'un procédé de modification selon l'une quelconque des revendications 1 à 12, lorsque ledit programme est exécuté par un ordinateur.

15. Support d'enregistrement lisible par un ordinateur sur lequel est enregistré un programme d'ordinateur selon la revendication 14.
